# EUROPEAN PATENT APPLICATION

(11) **EP 1 413 347 A2**
(43) Date of publication of application: **28.04.2004**
(21) Application number: 03078195.9
(22) Date of filing: 09.10.2003
(51) Int. Cl.: B01D 46/24

(54) **A device for removing and recuperating powders**

(30) Priority: 25.10.2002 IT MO20020307
(71) Applicant: Palladini, Walter, 42013 Casalgrande (IT); Palladini, Alberto, 41049 Sassuolo (Modena) (IT); Gianotti, Vanna, 42013 Casalgrande (Reggio Emilia) (IT)
(72) Inventor: Palladini, Walter, 42013 Casalgrande (IT); Palladini, Alberto, 41049 Sassuolo (Modena) (IT); Gianotti, Vanna, 42013 Casalgrande (Reggio Emilia) (IT)
(74) Representative: Gotra, Stefano

(57) **Abstract**

The device comprises a container (2) having a bottom (3) and a cover (4) The bottom (3) exhibits at least one inlet opening (5) and the cover (4) exhibits at least one outlet opening (6). The inlet opening (5) is predisposed for connection to an inlet conduit (51). The device further comprises a tubular filter element (7), arranged internally of the container (2), having a first end (8) and a second end (9) which are opposite one another. The second end (9) is arranged in contact with the bottom (3) in order that an internal part of the tubular filter element (7) faces the inlet opening (5). The tubular filter element (7) defines an internal chamber (10) which is in direct communication with the inlet opening (5) and is sealedly separated from an external chamber (11) in direction communication with the outlet opening (6). The device also comprises an aspiration device (12) for creating a depression in the external chamber (11), and a vibrating device (13) associated to the tubular filter element (7) for shaking the filter element (7) on command.

## Description

Powder removal devices are usefully applied in all production processes involving the movement and processing of materials in fine or even less fine powder state. A well-known phenomenon is that even light breezes can cause a large number of particles to be suspended in the air, especially if those particles are small in size. The surrounding atmosphere is thus contaminated. Existing standards impose severe norms on companies working with powder materials regarding the elimination and filtering of powders, both for internal environments and for eventual discharge of the powders into the atmosphere. The prior art provides a centralised plant for removal and recuperation of powders. This plant typically comprises a high-performance ventilator having, at its aspiration intake, a main duct for entraining aspirated air. A plurality of secondary conduits converge at the main duct; these secondary conduits are operative in localised points of the plant, aspirating where there is most presence of suspended powders, for example in the vicinity of conveyor belts or elevators for supply silos, baths or presses. The main duct transports the air and aspirated powders to a main powder removal group located upstream of the ventilator and generally comprising one or more centrifugal dust separators.

The powders collected in the main removal group are collected in special containers located in proximity of the group and are then removed manually or by use of auxiliary transport systems and taken back into the work circuit. The traditional technology includes some drawbacks.

Firstly, the head required of the ventilator is decidedly high, as it has to compensate for the relevant loss of load incurred in the various byways of the aspiration circuit system (branch-offs, section changes, crossing of one or more centrifuges). All of the above leads to the use not only of a very powerful and expensive ventilator, but also high energy costs.

A second drawback derives from the continuous need for maintenance to ensure the plant's efficiency, especially the removal of accumulations of powder along the conduits, the cleaning of the separators and the filter systems, and control of the conditions of all the conduits.

A third drawback is the need for special operations to bring the powders collected by the powder removal group back into the productive cycle: this is done manually or using auxiliary plants.

The main aim of the present invention is to obviate the above-mentioned drawbacks, by providing a device for collecting and recuperating powders which does not require the use of high-performance ventilators.

A further aim of the present invention is to provide a device for removal and recuperation of powders which does not require excessive levels of maintenance.

A further aim of the present invention is to provide a device for removal and recuperation of powders which automatically places the collected powders back into the production cycle.

Further characteristics and advantages of the present invention will better emerge from the detailed description that follows, of a preferred but not exclusive embodiment thereof, illustrated purely by way of example in the accompanying figures of the drawings, in which:
figure 1 is a first view of the device of the invention;
figure 2 is a second view of the device of the invention;
figure 3 is a first view of the device under operating conditions;
figure 4 is a second view of the device under operating conditions.

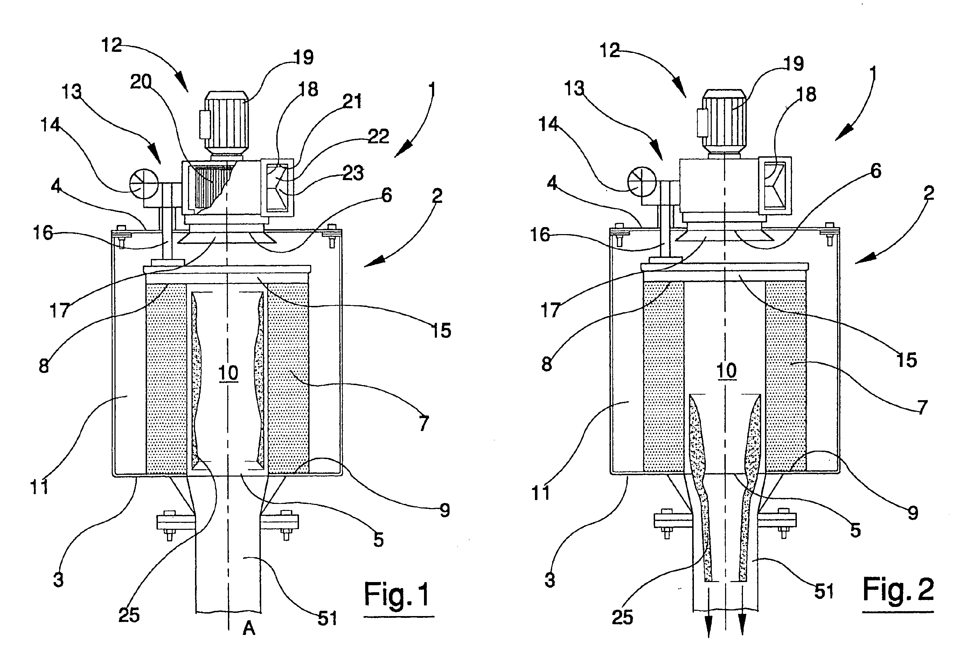

With reference to figure 1 of the drawings, the device of the invention is denoted in its entirety by 1. It comprises a container 2 having a bottom 3 which exhibits at least one inlet opening 5 and is provided with at least one outlet opening 6, the inlet opening 5 being predisposed to connect up to an inlet conduit 51.

A tubular filter element 7 is arranged internally of the container 2, having a first end 8 and a second end 9 which are opposite one another. The second end 9 is arranged in contact with the bottom 3 in such a way that the internal part of the tubular element faces the inlet opening 5. The tubular filter element 7 defines an internal chamber 10 which is in direct communication with the inlet opening 5 and is sealedly separated from an external chamber in direction communication with the outlet opening 6.

The device of the invention further comprises an aspiration device 12 for creating a depression in the external chamber 11 and a vibrating device 13 associated to the tubular filter element 7 and aimed at causing a shaking of the filter element on command.

The invention further comprises a cover 4 which exhibits the outlet opening 6 and is located superiorly in an opposite position to the bottom 3. The cover 4 is fixed removably to the container 2 in order to guarantee easy accessibility to the tubular filter element 7, and externally bears the aspiration device 12.

The vibrating device 13 comprises a motor 14; a plate 15, connected to the first element 8 of the tubular filter element 7; a rod 16 which extends through the container 2, connected by an end of the motor 14 and by another end to the plate 15.

The aspiration device 12 exhibits an aspiration intake 17, connected to the outlet opening 6 of the container 2, and a delivery mouth 18.

The aspiration device 12 comprises a motor 19 and an impeller 20 connected to the motor. The impeller 20 creates a depression which sucks air internally of the aspiration intake 17 through the outlet opening 6 of the container 2.

The device of the present invention further comprises a deflector 21 for breaking up the air flow in outlet from the aspiration device 12, having an inlet section 22, connected to the delivery mouth 18, and an outlet section 23. The outlet section 23 can, for example, exhibit two opposite exit openings arranged at right angles with respect to the inlet section 22, in order to prevent introduction of unwanted draughts of air in the work environment.

With reference to figure 1, the device operates as follows.

The impeller 20 is operating, the depression created at the aspiration intake 17 induces suction of fluid internally of the container 2 through the inlet opening 5. The aspirated fluid flows internally of the chamber 10 from where it passes into the chamber 11 through the filter element 7. As the treated fluid is essentially composed of air and powder particles suspended in the air, the flow of the fluid across the tubular filter element 7 causes a progressive accumulation 25 of particles on the internal walls of the element 7 itself.

The filtered air flows internally of the chamber 11 towards the outlet opening 6, through which it flows internally of the aspiration intake 17. From the aspiration intake 17 the filtered air is returned to the atmosphere through the delivery mouth 18. The deflector 21 breaks up the flow in outlet in order to prevent unpleasant and undesirable draughts in the workplace atmosphere.

The increase in the accumulation 25 leads to a progressive clogging of the filter element 7 which, if no action is taken, would quickly become non-functional. The vibrating device 12 is included for this purpose; when the aspiration device 12 is switched off, the vibrating device is periodically turned on and shakes the plate 15 rigidly connected to the filter element 7. The vibrating device 13, by shaking the filter element 7, induces a detachment of the accumulation 25 of powders from the internal walls of the filter element 7. The axis A of the filter element 7 is inclined with respect to the horizontal. The inclination of axis A is such as to encourage the powder to fall by force of gravity and/or also to favour entraining of the particles which detach from the filter element 7 towards the opening 5 and into the inlet conduit 51, into which they had previously been aspirated. Preferably the inclination of the axis A is close to the vertical.

To favour correct cleaning of the filter element 7, the aspiration device 12 used could have a reversible flow function, so that an inversion of air flow could detach any particles remaining on the internal walls of the filter element 7.

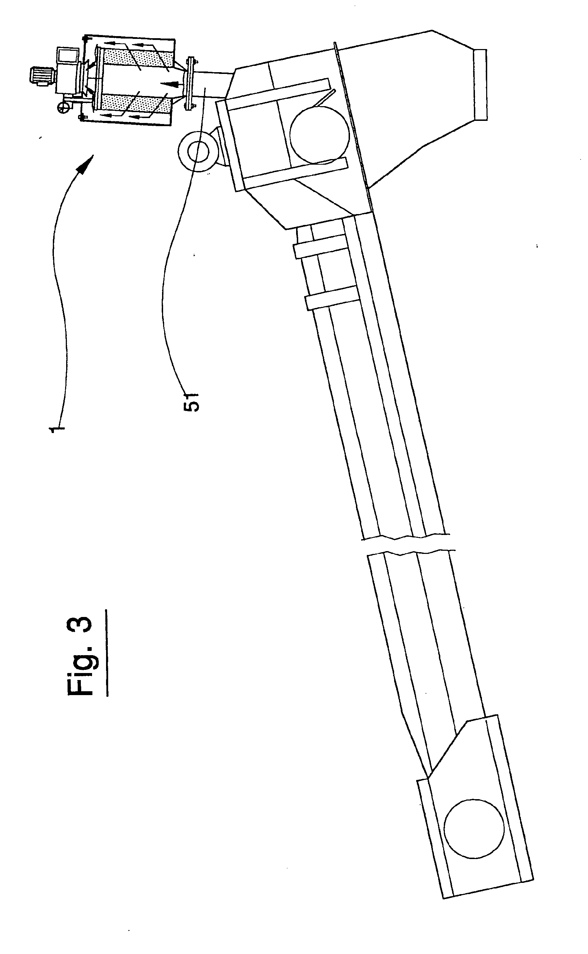

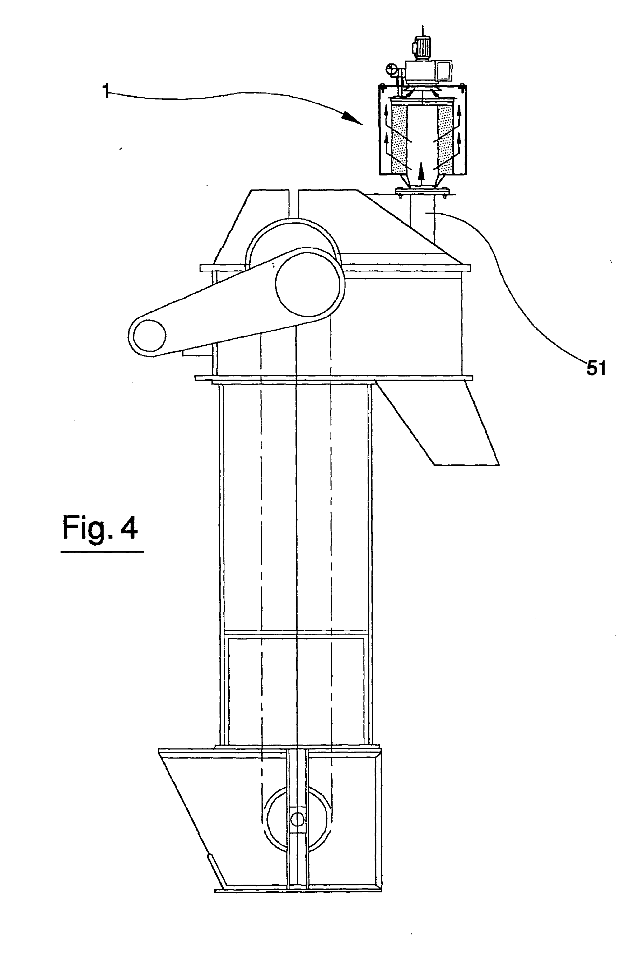

The device of the invention advantageously has the double function of capturing the suspended powders in the atmosphere and bringing them directly back into the work cycle. As can be seen in figures 3 and 4, the conduit 51 can for this reason be arranged in a work area in which it can have the double function of aspiration mouth and passage through which the collected powders can be returned to the work cycle.

The invention offers important advantages.

Firstly, the invention enables considerable reductions to be made in buying costs and management costs for a powder removal and recycling plant. The device avoids the use of high-performance ventilators, characterised by high buying and energy costs, as the aspirated intake is localised in those parts of the factory where it is needed. This localizing characteristic also enables a considerable simplification in the geometry of the plant itself, making it unnecessary to set up complex duct systems all leading to a centralised filter unit.

The absence of a duct system removes all the problems relating to complex maintenance operations aimed at searching out and repairing any loss of head along the conduits and keeping the air passage ducts clean. With the invention, maintenance operations can be carried out without any need to dismount large elements - it is enough to work on the different devices of the type described at the various point of the production plant.

The intrinsic simplicity of the device of the invention offers considerable applicational flexibility. It can be universally adapted to all types of plants for movement or working of powders.

A further important advantage is that any faults which occur do not compromise the operability of the whole aspiration plant, but only a part of it. Furthermore, any further operations aimed at recuperating the recovered particles are effectively rendered unnecessary, since the device of the invention automatically and autonomously carries out those tasks.

## Claims

1. A device for removing and recuperating powders, comprising:
a container (2) having a bottom (3), which exhibits at least one inlet opening (5) and at least one outlet opening (6), the inlet opening (5) being predisposed for connection to an inlet conduit (51);
a tubular filter element (7), arranged internally of the container (2), having a first end (8) and a second end (9) which are opposite one another, the second end (9) being arranged in contact with the bottom (3) in order that an internal part of the tubular filter element (7) faces the inlet opening (5);
The tubular filter element (7) defining an internal chamber (10) which is in direct communication with the inlet opening (5) and is sealedly separated from an external chamber (11) in direction communication with the outlet opening (6);
an aspiration device (12) for creating a depression in the external chamber (11);
a vibrating device (13) associated to the tubular filter element (7) for shaking the filter element (7) on command.

2. The device of claim 1, **characterised in that** an axis (A) of the tubular filter element (7) is inclined with respect to a horizontal plane.

3. The device of claim 1, **characterised in that** it comprises a cover (4) which exhibits the outlet opening (6).

4. The device of claim 3, **characterised in that** the cover (4) is located superiorly and in an opposite position to the bottom (3).

5. The device of claim 1, **characterised in that** the vibrating device (13) comprises:
a motor (14);
a plate (15) connected to the first end (8) of the tubular filter element (7);
a rod (16) extending across the container (2), connected at an end thereof to the motor (14) and at another end thereof to the plate (15).

6. The device of claim 1, **characterised in that** the aspiration device (12) exhibits an aspiration intake (17), connected to the outlet opening (6) of the container (2), and a delivery mouth (18).

7. The device of claim 6, **characterised in that** the aspiration device (12) comprises:
a motor (19);
an impeller (20) connected to the motor (19).

8. The device of claim 7, **characterised in that** it comprises a deflector (21) for breaking up a flow of air in outlet from the aspiration device (12), which deflector (21) has an inlet section (22), connected to the delivery mouth (18), and an outlet section (23).
